# EUROPEAN PATENT SPECIFICATION

(11) **EP 0 458 372 B1**
(45) Date of publication and mention of the grant of the patent: **08.11.1995**
(21) Application number: 91112806.4
(22) Date of filing: 25.05.1988
(51) Int. Cl.: G11B 21/08, G11B 7/085, G11B 19/12

(54) **Apparatus for reproducing signals from both sides of discs**
Gerät zur Wiedergabe von Signalen von beiden Seiten von Platten
Appareil pour la reproduction de signaux des deux faces de disques

(30) Priority: 08.06.1987 JP 142647/87
(43) Date of publication of application: 27.11.1991
(62) Divisional of application: 88108341.4
(73) Proprietor: SANYO ELECTRIC CO., LTD., Moriguchi-shi, Osaka 570 (JP)
(72) Inventor: Okamoto, Kazujuki, Shimogyo-ku, Kyoto (JP)
(74) Representative: Glawe, Delfs, Moll & Partner

(56) References cited:
- PATENT ABSTRACTS OF JAPAN vol. 6, no. 152 (P-134)(1030)12 August 1982 & JP-A-57 071 553
- PATENT ABSTRACTS OF JAPAN vol. 9, no. 177 (P-375)(1900)23 July 1985 & JP-A-60 050 761
- PATENT ABSTRACTS OF JAPAN vol. 5, no. 142 (P-79)(814) 8 September 1981 & JP-A-56 077 953

## Description

### APPARATUS FOR REPRODUCING SIGNALS FROM BOTH SIDES OF DISCS

### FIELD OF THE INVENTION

The present invention relates to an apparatus for reproducing information such as audio signals or video signals from both sides of discs in succession, i.e. first from one side of the disc and subsequently automatically from the other side thereof.

### BACKGROUND OF THE INVENTION

Audio signals are reproduced from both sides of records in succession using conventional record players by reproducing signals from one side of the record first, then removing the record from the player, placing the record as turned upside down on the player and reproducing signals from the other side. This procedure is very cumbersome.

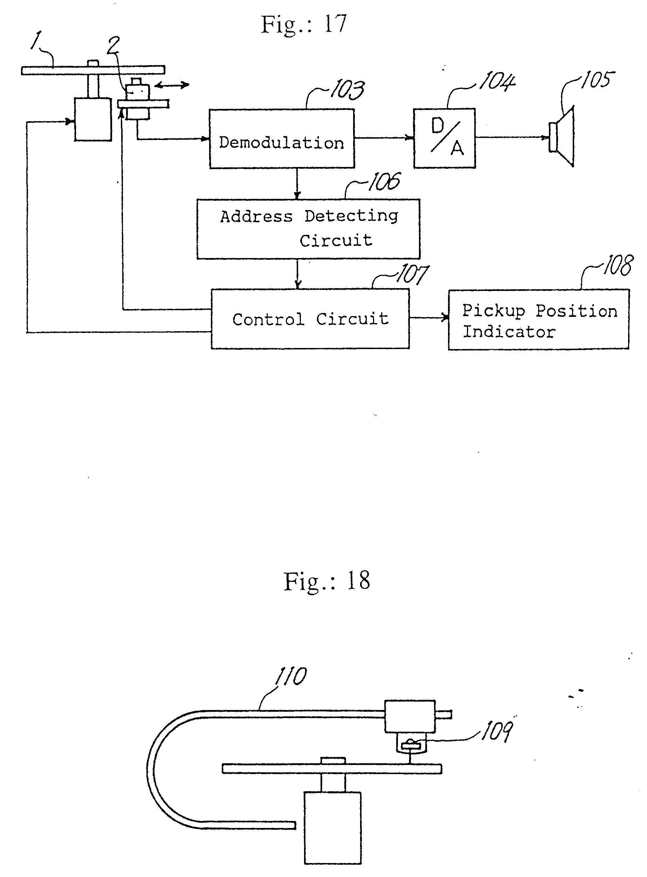

Accordingly, Examined Japanese Patent Publication SHO 62-4762 proposes a record player which is adapted to reproduce signals from both sides of a record in succession automatically. With reference to Fig. 18, the proposed record player comprises a linear tracking arm 109 having a pickup, and U-shaped guide means 110 for transferring the arm from one side of the record to the other side. After the record has been played for reproduction from one side by the pickup, the linear tracking arm is transferred to the other side by the guide means, and the record is played for the other side by reversely rotating the record drive motor.

When the record player is used for signal reproduction from both sides of the record in succession, no reproduced signal is obtained during the transfer of the linear tracking arm from one side of the record to the other side thereof. During this period, therefore, the user is unable to recognize whether the arm is being transferred or the reproduction is interrupted owing to a malfunction of the player.

On the other hand, a disc player has been proposed which is adapted for use with discs having audio signals and address data recorded thereon in the form of digital signals and in which the position of the pickup is indicated during signal reproduction (Unexamined Japanese Patent Publication SHO 60-50761). With reference to Fig. 17 showing the construction of the disc player, the signals read out of a disk 1 by a pickup 2 are fed to a loudspeaker 105 via a demodulator circuit 103 and a D/A converter 104 for the reproduction of audio signals recorded on the disc 1. The output signal from the demodulator circuit 103 is fed to an address detection circuit 106 to extract address data recorded along with the audio signal. The address data is sent to a control circuit 107 for controlling the rotation of the disc and the feed of the pickup 2 and then to a pickup position indicator 108, which in turn indicates the position of the pickup relative to the disc.

This pickup position indication system will be convenient for use in the above-mentioned apparatus for reproducing signals from both sides of discs for indicating the position of the pickup during signal reproduction. However, during the transfer of the pickup from one side of the disc to the other side, the system fails to indicate the position of the pickup since no address signal is available during this period. Accordingly, there still remains the problem that the user is unable to distinguish between the transfer of the pickup from one side of the disc to the other side and an abnormality occurring in signal reproduction.

In addition to the above mentioned operation it may be useful to have a random access to particular parts of the disc.

JP-A-60-50761 discloses a control system for a pickup in which a counter selects the tracks crossed by the pickup and wherein the number of tracks is displayed accordingly.

It is therefore an object of the present invention to provide an apparatus for reproducing both sides of a disc having a random access mode in which malfunctions due to a desired access to addresses which are not present on the disc can be avoided.

This object is achieved by an apparatus as defined in claim 1; claim 2 represents of further development of the invention.

The present invention is described with respect to the following description and the appended drawings, wherein the random access mode is in particular described with respect to figures 6 to 16.

### BRIEF DESCRIPTION OF THE DRAWINGS

Fig. 1 is a block diagram showing the basic construction of characteristic portion of the reproduction apparatus of the invention;
Fig. 2 is a perspective view showing the appearance of a disc player;
Fig. 3 is a perspective view partly broken away of a pickup transport assembly;
Fig. 4 is a side elevation of the pickup transport assembly;
Fig. 5 is a diagram illustrating the relationship between the signal recording face and the position of the pickup;
Fig. 6 is a fragmentary block diagram showing showing an disc player according to the invention;
Figs. 7 (a) and (b) are diagrams showing representations on the display when a chapter is designated;
Figs. 8 (a), (b) and (c) are diagrams showing representations on the display when a program is set;
Fig. 9 is a flow chart showing the operation of the player of Fig. 20;
Fig. 10 is a fragmentary block diagram showing another disc player of different construction;
Figs. 11 (a), (b) and (c) are diagrams showing representations on the display for usual reproduction;
Fig. 12 is a diagrm showing a representation on the display when a lead-out signal is detected;
Fig. 13 is a diagram showing a representation on the display during search;
Figs. 14 (a), (b) and (c) are diagrams showing representations on the display when the designated address has not been found for random access;
Fig. 15 is a diagram illustrating a search operation;
Fig. 16 is a flow chart showing the operation of the player of Fig. 24;
Fig. 17 is a block diagram showing the construction of a conventional disc player; and
Fig. 18 is a front view schematically showing a conventional record player for double-face reproduction.

### DETAILED DESCRIPTION OF EMBODIMENTS

### Basic Construction

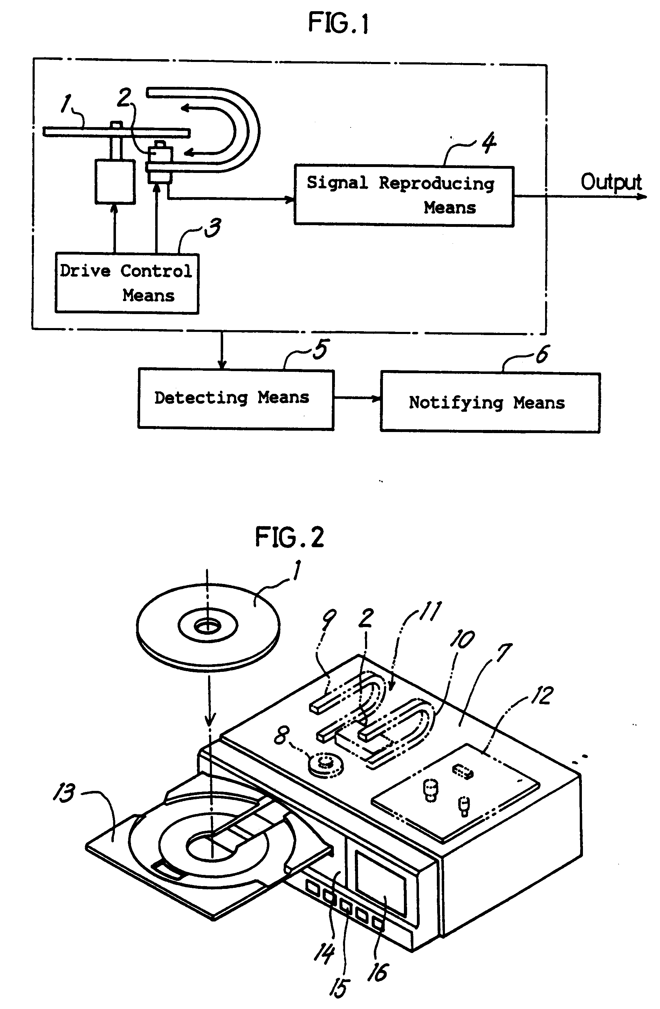

Fig. 1 shows the basic construction of the apparatus of the invention for reproducing signals from both sides of discs. The rotation of the disc 1 and the feed or transport of a pickup 2 are controlled by drive control means 3. The output signal of the pickup 2 is fed to signal reproduction means 4, which feeds a reproduced signal to a display or a loudspeaker. When the reproduction side of the disc is being changed over from one side to the other side, a change-over detecting means 5 detects the change-over according to the output signal, for example, of the drive means 3 or the reproduction means 4. The detection means 5 delivers an output signal to informing or notifying means 6, such as a display, speaker or the like, which enables the user to recognize that the reproduction side is being changed over.

Described below are several optical disc players embodying the invention and having the above basic construction.

These disc players have a pickup transport assembly which will be described below with reference to Figs. 2 to 4. The construction of this assembly is common to these players.

### Pickup Transport Assembly

Fig. 2 shows the appearance of a video disc player. A cabinet 7 in the form of a flat rectangular parallelepiped houses a turntable 8 for drivingly rotating an optical disc 1, a pickup transport assembly 11 for moving the pickup 2 along a pair of U-shaped guide rails 9, 10, and a circuit board 12 provided with electric circuits such as drive control circuit for these components and a video signal processing circuit. A disc tray 13 for placing the disc 1 thereon is provided at an opening in a front panel 14 and is movable into or out of the cabinet. The front panel 14 is provided with a plurality of operation keys 15 and an LED display panel 16 for showing the state of the player in operation.

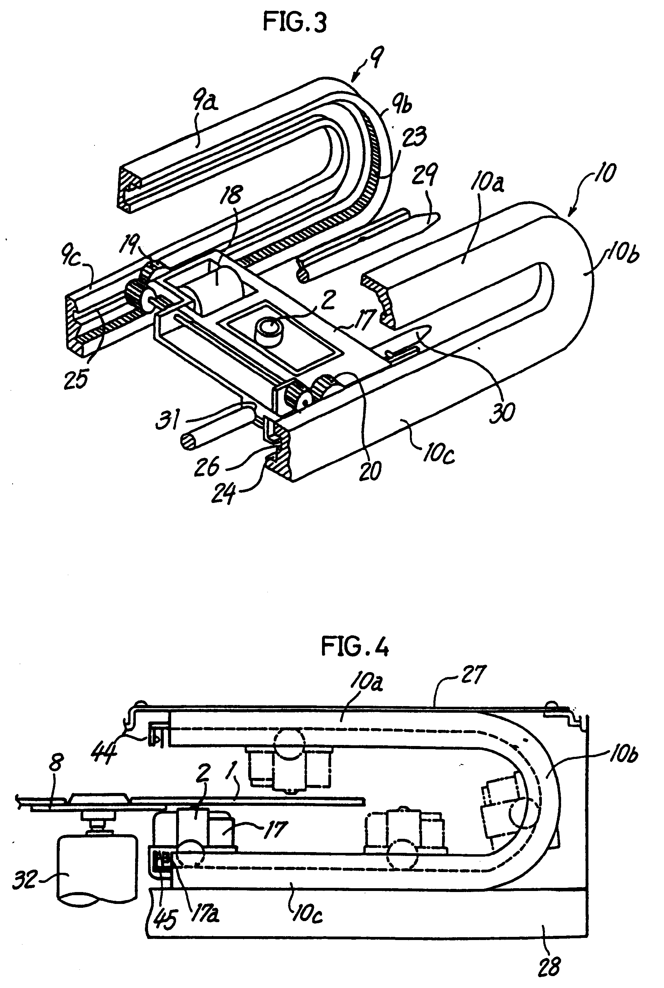

The pickup 2 comprises an optical system including a semiconductor laser, objective lens and the like, a converter for converting an optical signal to an electric signal, etc. With reference to Figs. 3 to 4, the pickup 2 is mounted on a support base 17, which has at its respective opposite sides a pair of pinions 19, 20 drivingly rotatable by a feed motor 18, and a pair of guide rollers.

The guide rails 9, 10 comprise upper straight portions 9a, 10a extending along the upper side of the disc positioned in place, lower straight portions 9c, 10c extending along the lower side of the disc, and circulararc connecting portions 9b, 10b interconnecting the respective pairs of the straight portions, respectively. Each guide rail is U-shaped in its entirety. The guide rails 9, 10 are fixed to an upper chassis 27 and a lower chassis 28. The guide rails 9, 10 are respectively formed in the inner side with racks 23, 24 meshing with the pinions 19, 20, and guide grooves 25, 26 extending along the racks for the guide rollers to fit in.

The upper and lower chassis 27, 28 are respectively provided with a pair of guide poles 29, 30 extending in parallel to the respective straight portions 10a, 10c of the guide rail 10. The pickup support base 17 is formed in its bottom side with a guide bore 31 for the guide poles 29, 30 to fit in.

As seen in Fig. 4, the turntable 8 is driven by a spindle motor 32.

The feed motor 18, when driven, drives the support base 17 on the guide rails 9, 10. During travel on the lower straight portions 9c, 10c, the support base 17 is guided straight by the guide pole 30 fitting in the guide bore 31, whereby the lower side of the disc 1 is scanned. During travel on the upper straight portions 9a, 10a, the support base 17 is guided along straight by the guide pole 29 fitting in the bore 31, whereby the upper side of the disc 1 is scanned. The lower and upper sides of the disc can be scanned in succession by the travel of the base 17 along the connecting portions 9b, 10b of the guide rails.

As shown in Fig. 4, the guide rail straight portions 10a, 10c are provided with an upper lead-in switch 44 and a lower lead-in switch 45, respectively, at their ends close to the disc inner periphery. The pickup support base 17 has a lug 17a for actuating the switches 44, 45.

### Signal Format

The signal recording format of the optical disc will be described next.

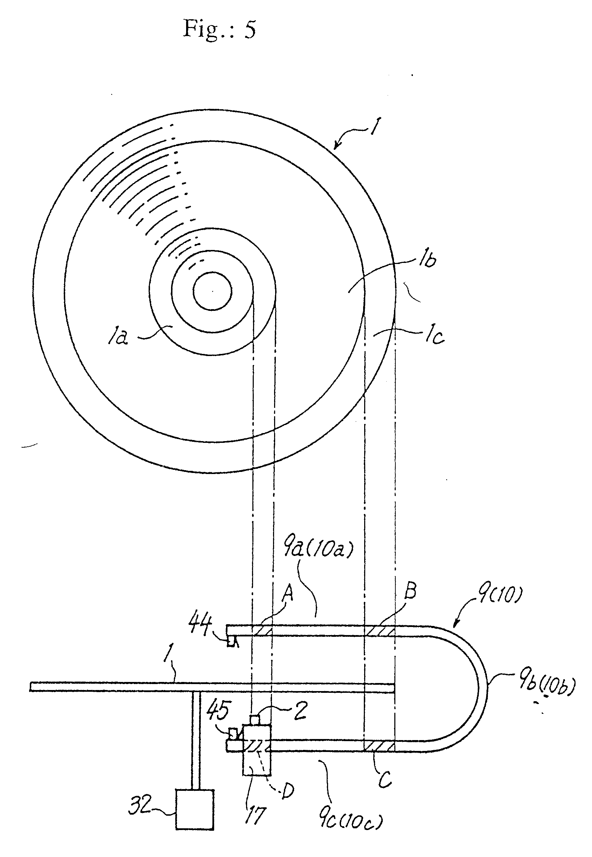

With reference to Fig. 5, the signal recording face of the disc 1 has three areas: a lead-in area la along the inner periphery of the disc, a lead-out area 1c at the outer periphery of the disc, and a program area 1b between these two areas 1a, 1c. The lead-in area 1a comprises about 900 signal tracks. Each of the tracks has recorded therein a lead-in signal designating the data recording start location at the 17th and 18th horizontal scanning lines (17H, 18H) in the vertical blanking period of video signals. The lead-out area 1c comprises about 600 signal tracks, each of which has recorded therein a lead-out signal designating the data recording completion location at the 17th H and 18th H in the vertical blanking period. The program area 1b has recorded therein video signals at a constant linear or angular velocity from inner periphery toward outer periphery, along with various items of code data as will be described later.

More specifically, in the case of CLV (constant linear velocity) discs, the chapter number indicating a program section is recorded at the 18th H of the vertical blanking period of the program area 1b, and program time indicating the duration of reproduction from the program area start point is recorded at the 17th H and 18th H. In the case of CAV (constant angular velocity) discs, a video signal frame number is recorded at the 280th H and 281st H of the vertical blanking period instead of the program time.

With reference to Fig. 5 when the support base 17 is positioned at an area A or D toward the disc inner periphery of the upper straight portions 9a, 10a or lower straight portions 9c, 10c of the guide rails 9, 10, the pickup 2 detects the lead-in signal, whereby the start of reproduction of the program area is detected. Further when the support base 17 is positioned at the end area B or C toward the disc outer periphery of the upper straight portions 9a, 10a or lower straight portions 9c, 10c of the rails 9, 10, the pickup 2 detects the lead-out signal, whereby the completion of reproduction of signals from the recording face is detected.

When the lower side, for example, of the disc is to be played, the spindle motor 32 is rotated forward, and the feed motor is then driven to move the support base 17 to the ends toward the disc inner periphery of the lower straight portions 9c, 10c of the guide rails 9, 10. Upon the actuation of the lower lead-in switch 45, the feed motor is reversely rotated, thereby causing the pickup 2 to start scanning the lead-in area 1a of the disc 1. When the spindle motor 32 has reached a speed (1800 r.p.m.) specified for signal reproduction during the scanning, the lead-in signal is read out. Regardless of whether the disc 1 is a CLV disc or CAV disc, the speed of rotation of the disc specified for the reproduction of the lead-in area is 1800 r.p.m., so that the lead-in signal can be read out irrespective of the kind of disc. Upon reading the lead-in signal, the pickup 2 moves out of the lead-in area 1a by repeating a track jumping action to start scanning the program area 1b.

When the upper side of the disc is to be played, the spindle motor 32 is rotated in a direction opposite to the direction for the disc lower side, the support base 17 is then moved toward the ends toward the disc inner periphery of the upper straight portions 9a, 10a of the gudie rails 9, 10, and the feed motor is reversely rotated upon the actuation of the upper lead-in switch 45, causing the pickup to scan the lead-in area 1a and the program area 1b in the same manner as above.

Affixed to each side of the disc 1 radially inwardly of the lead-in area 1a is a label representing the content of the record on the other side thereof. Thus, the label affixed to the A side of the disc 1 bears information as to what is recorded on the B side, while the label affixed to the B side bears information as to what is recorded on the A side.

In this way, the signal recording side of the disc and the side bearing the corresponding label are in opposite relationship for the following reason. With conventional single-side reproduction apparatus, the pickup 2 is disposed on the lower side of the disc 1 as seen in Fig. 31, whereas when the disc is to be placed in the apparatus, the user can recognize the label as affixed to the other side of the disc.

The disc is loaded into the player of the invention usualy with the A side down, i.e., with the label bearing the data as to the A side positioned up.

### First Embodiment

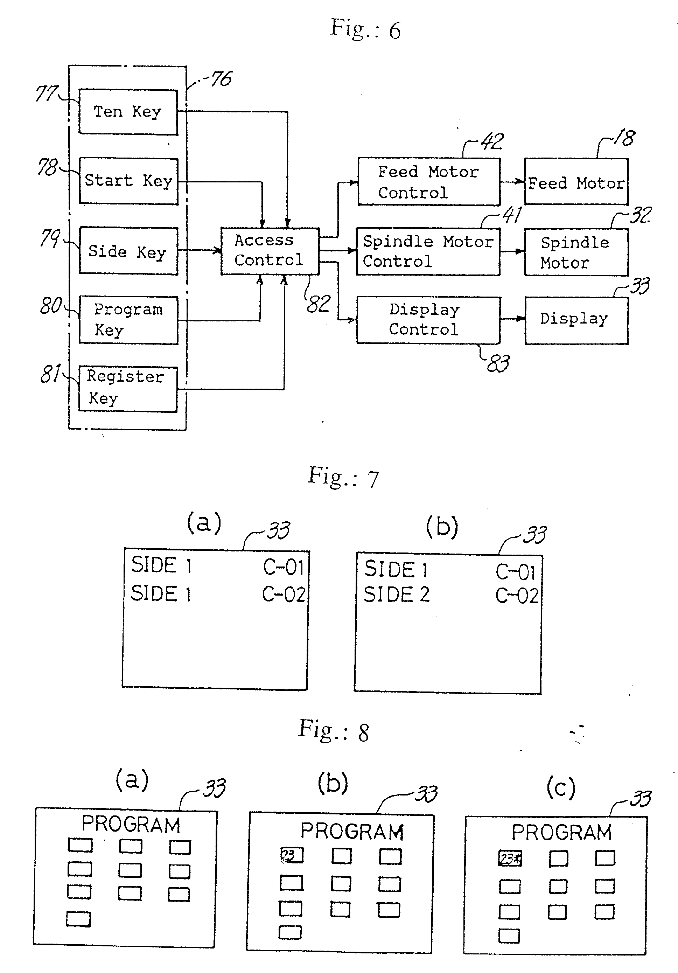

The embodiment shown in Fig. 6 is adapted for random access to both sides of the disc.

Address designating means 76 for specifying the address to be accessed comprises number entry keys (ten keys) 77 for entering the frame number to be accessed, program time concerned or the desired chapter number, a start key 78 for starting access, a side key 79 for changing over the reproduction side to be accessed, a program key 80 for setting a program, and a register key 81 for registering the program. The output ends of these keys are connected to an access control circuit 82 for preparing control signals for the feed motor control circuit 42, spindle motor control circuit 41 and display control circuit 83.

First with reference to Figs. 6 and 7, how to designate an address for random access using some of the number entry keys 77 and the side key 79 will be described.- When an address display mode is set during reproduction from A side or B side of the disc, the display 33 shows the side data as to the side for the current reproduction and the chapter number concerned as shown in the first line in Fig. 7 (a). Instead of the chapter number, the program time or frame number can be displayed. Next, the address to be accessed (e.g. chapter "02") is fed to the access control circuit 82 using number entry keys 77, whereby the representation in the second line of Fig. 21 (a) is given, and the chapter "02" on A side is specified. If this chapter "02" is present on B side, the side key 79 is depressed, whereby the side data is changed to "SIDE 2" representing B side as shown in the second line of Fig. 7 (b). Thus, when the chapter number only is entered, A side is designated uncondionally, and the side key 79, when depressed, specifies B side. Consequently, the address and side are designated.

After the desired access data has been completely entered, the start key 78 is depressed, whereupon the access control circuit 82 feeds a control signal to the feed motor control circuit 42 and the spindle motor control circuit 41. The rotation of the feed motor 18 and the spindle motor 32 is thereby controlled, bringing the pickup to the address to be accessed and specifying the direction of rotation of the disc according to the side data.

The access to be made based on the data of Fig. 7 (b), for example, will be described. While the feed motor 18 is in low-speed rotation, causing the pickup to scan the chapter "C-01" on the disc lower side, the start key 78 is depressed, whereupon the feed motor 18 is brought into high-speed rotation, permitting the pickup to perform an upward JET TURN movement and reach the innermost peripheral portion of the disc upper side. During this movement, the spindle motor 32 rotates reversely. The feed motor 18 is thereafter slowed down for the pickup to read out the lead-in signal from the disc upper side (B side). This indicates that the spindle motor 32 has reached the specified speed for reading out signals, whereupon the pickup starts scanning the chapter "C-02" at the specified address.

A program mode will be described next in which a plurality of desired chapters are reproduced in succession using memories having stored therein the addresses of the chapters.

When the program key 80 is depressed, the display control circuit 83 shows on the display 33 an image for entering a program as seen in Fig. 8 (a), whereby a program entering mode is set. The circuit 83 has ten program setting memories, and ten blocks are shown on the screen accordingly. Next, the address to be accessed (e.g. chapter "23") is set by number entry keys 77, and the side data indicating A side or B side having the address is entered by the side key.

The side data is entered in the following manner. For example when reproduction from A side (SIDE 1) is being done during program setting to specify the chapter to be accessed on A side, the chapter number "23" is left displayed as seen in Fig. 8 (b) without depressing the side key 79. Alternatively, if the chapter to be accessed is on B side, the side key 79 is depressed. This adds the mark * to the rear end of the number "23" on the display as seen in Fig. 8 (c) to display "23*". Thus, if the chapter to be set for access is present on the disc side which is opposed to the pickup, the address only is entered, whereas the side key is depressed only when the address is on the other side.

After the address data including the side data has been completely set and displayed using number entry keys 77 and side key 79, the register key 81 is depressed, whereupon the address data is stored in the memory within the access control circuit 82. Such address data can be entered repeatedly up to ten times.

When all the desired items of address data have been completely registered in this way, the pickup moves according to the program data in the memories to realize random access to both sides of the disc.

With reference to Figs. 7 and 8, the display portions which are waiting for data input may be flickered, or the representation of Fig. 8 may be given also during the reproduction of the program in the program mode, with the portion of the program being reproduced flickered. This realizes a readily recognizable display. In this case, the program key 80 used in the program entering mode is usable also as a display on-off switch. The address designating means 76 including the number entry keys 77, start key 78, etc. may of course be provided on the main body of the video disc player or on a remote control unit.

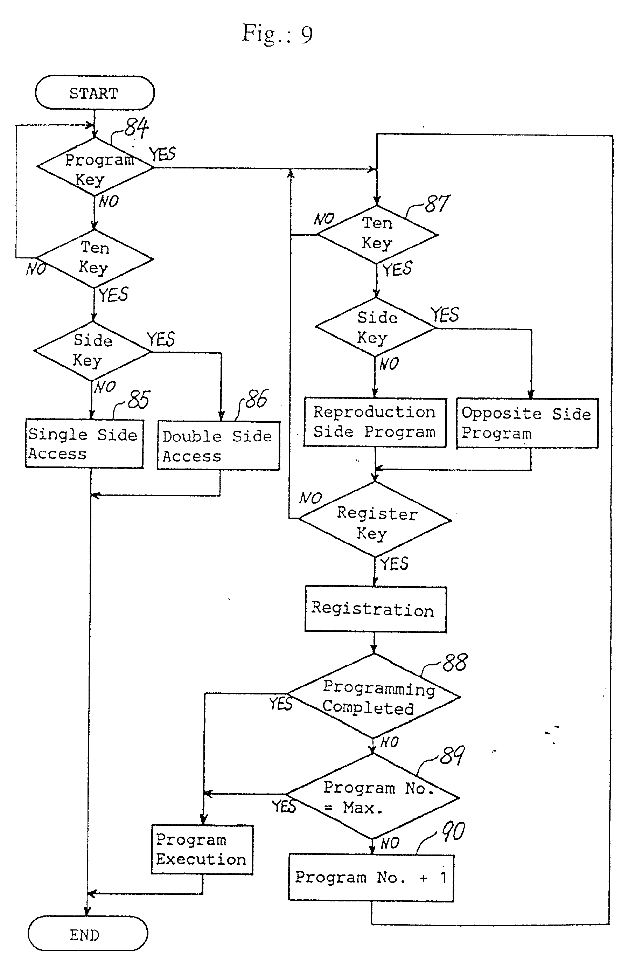

Fig. 9 shows the operation of the access control circuit 82. Step 84 inquires whether the program key has been depressed. If the answer is in the negative, the number entry keys and the side key are checked. If the side key has been depressed, the acess mode is set in step 86 for both sides. When the side key has not been manipulated, the access mode is set for one side in step 85. If the answer to the inquiry of step 84 is affirmative, the number entry keys are checked in step 87, and the side key is thereafter checked. If the side key has not been depressed, the program mode is set for a case wherein the address to be accessed is present on the disc side currently subjected to reproduction. If otherwise, the program mode is set for a case wherein the contemplated address is present on the opposite disc side. Subsequently, the progrom is registered by depressing the register key. When the program is found to have been registered in step 88, the program is executed. If otherwise, step 89 inquires whether the number of address data items already programmed (program number) has reached the number of memories available (e.g. ten). When the answer to the inquiry is negative, the program number is increased by l in step 90, whereupon the sequence returns to step 87. If the answer is affirmative, the program is executed. Consequently, even if the program setting has not been completed, the program is executed antomatically provided that the program number has reached "10."

Accordint to the present embodiment, the combination of the designated address and the side data realizes random access to both sides of the disc.

### Second Embodiment

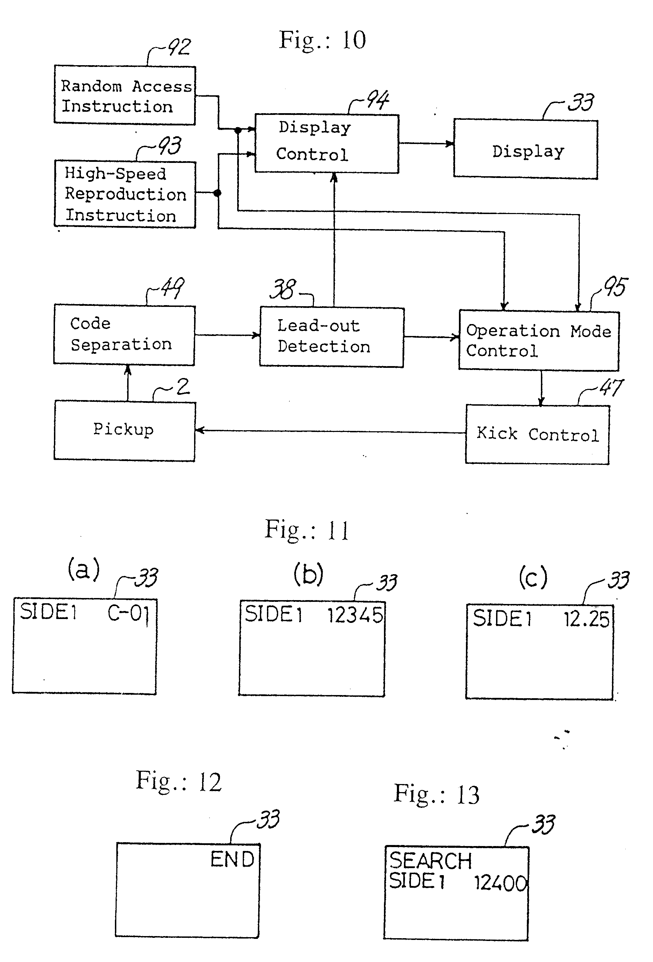

Fig. 10 shows an embodiment adapted to properly move the pickup and properly show representations for random access.

In the usual reproduction mode, the pickup is moved in the same manner as in the disc players already described. Figs. 11 (a), (b) and (c) show examples of representations on the display. As illustrated, the display 33 shows side data (e.g. "SIDE 1") indicating that the representation side is A side or B side, and a chapter number (e.g. "C-01"), frame number (e.g. "12345") or program time (e.g. 12.25).

The video disc player of Fig. 10 can be set in a high-speed reproduction mode wherein the program area is reproduced while causing the pickup 2 to perform a jumping action by the kick control circuit 47. In this case, the feed motor 18 rotates at a higher speed than in the usual reproduction mode, and the mode of reproduction from the lead-out area slightly differs from the usual reproduction mode. The high-speed reproduction mode is utilized generally for searching for the desired area for reproduction with reference to the display screen. However, if the area desired for reproduction immediately precedes the lead-out area, the pickup will move past the desired area into the lead-out area and read out the lead-out signal. With the disc player adapted for double-side reproduction, the pickup consequently performs a JET TURN movement. This entails the problem of necessitating some time for the pickup to return to the desired reproduction position after performing a JET TURN movement in the opposite direction. The present embodiment therefore has the following expedient.

With reference to Fig. 10, high-speed reproduction instructing means 93 having an operation key delivers a high-speed reproduction instruction to a display control circuit 94 and an operation mode control circuit 95 to set the high-speed reproduction mode, whereupon the lead-out signal detected from the output signal from the pickup 2 via the code separating circuit 49 and the lead-out detecting circuit 38 is fed to the operation mode control circuit 95. This causes the control circuit 95 to set the kick control circuit 47 in a still picture reproduction mode. Consequently, the pickup 2 repeats a track jumping action to remain at the same track position.

Further the display control circuit 94 shows "END" on the display 33 as shown in Fig. 12 in response to the lead-out signal. Fig. 13 shows a representation on the display 33 in the high-speed reproduction mode. The side data "SIDE 1" and the current address "12400" are on display under the characters of "SEARCH." This representation is changed over to that shown in Fig. 12 upon the detection of the lead-out signal.

The pickup remains in the same track position and "END" is displayed for 5 seconds after the detection of the lead-out signal, followed by high-speed rotation of the feed motor 18 for a JET TURN movement. Accordingly, in the case where the display "END" is given although the desired reproduction area could be found in the high-speed mode, the user may give an instruction for a search operation in a reverse direction to the usual track reproduction direction, i.e. from disc outer periphery toward inner periphery, (hereinafter referred to as "reverse search") before the five-second period elapses, whereby the pickup can be moved to the desired reproduction position before starting the JET TURN movement.

If the pickup performs JET TURN in the absence of the reverse research instruction during the five-second interval, the pickup scans the disc upper side from the innermost peripheral portion thereof as in the usual reproduction mode for high-speed reproduction. Upon the detection of the lead-out signal on the disc upper side, the pickup is retained in a position and "END" is displayed as in reproduction from the lower side. When five seconds has elapsed thereafter without any reverse search, the pickup shifts to the innermost peripheral portion on the disc lower side, i.e. the initial stand-by position, and is held at a stop.

Next, the movement of the pickup and the representation on the display in the random access mode will be described.

A random access instruction is given to the display control circuit 94 and the operation mode control circuit 95 to set the player in the random access mode, by manipulating random access instructing means 92 comprising a random access start key, etc. after the address to be accessed has been set by number entry keys.

The address to be accessed includes one of a chapter number, frame number and program time, and side data as to A side or B side. According to the side data, the pickup 2 scans the disc upper or lower side from the innermost peripheral portion toward the outer periphery. At this time, the pickup scans first at the highest velocity (e.g. 300 times the usual speed, to be referred to as 300-fold velocity or "fast X300"; velocities will hereinafter be expressed similarly). As the pickup approaches the address to be accessed, the reproduction velocity is decreased from 300-fold velocity to 100-fold velocity, to 16-fold velocity, to 3-fold velocity and to the usual velocity. Upon finding the designated address, the pickup reproduces the contemplated chapter in the usual manner.

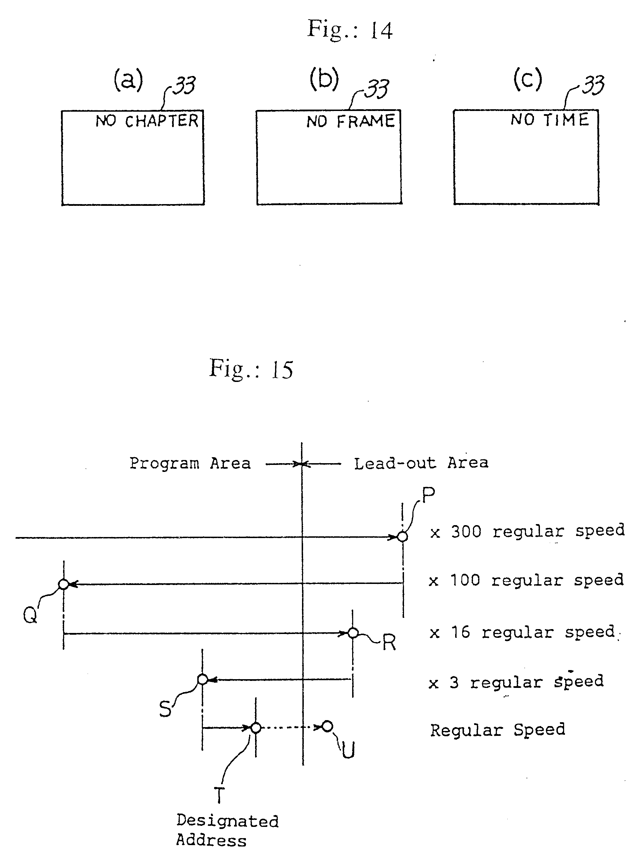

If the pickup fails to locate the designated address in the random access mode, for example when the chapter "05" on A side is designated although A side has recorded thereon the data for the chapters "01" to "04", the following operation is carried out. When the pickup 2 reads out the lead-out signal on reaching the lead-out area of A side, the operation mode control circuit 95 sets the kick control circuit 47 in a still picture reproduction mode to hold the pickup 2 on the same track. Upon the detection of the lead-out signal, the display control circuit 94 shows on the display 33 the characters of "NO CHAPTER" indicating that the designated chapter number was not locatable, "NO FRAME" indicating that the designated frame number was not locatable or "NO TIME" meaning that the designated program time was not found, according to the kind of address data (see Figs. 14 (a), (b) and (c)). The pickup is retained in the same position and the representation on the display is maintained until the user follows another address designating procedure by depressing number entry keys or until the random access mode is cancelled. Thus the display of Fig. 14 (a), (b) or (c) enables the user to recognize that the designated address is not present.

In the random access mode, the pickup 2 reads out the lead-out signal at any reproduction velocity of 1 to 300 times the usual velocity, whereas the lead-out detecting circuit 38 is so adapted as to detect the lead-out signal read out only at the usual reproduction velocity as the regular lead-out signal for the following reason.

With reference to Fig. 15, when an address T is designated which immediately precedes the lead-out area on the signal recording face of the disc, the pickup reciprocatingly travels from the program area to the lead out area and vice versa at decreasing velocities of 300-fold, 100-fold, 16-fold, 3-fold and usual velocity and finally reaches the location of the designated address T via points P, Q, R and S. If the lead-out signal is detected during this high-velocity search process at 300-fold, 100-fold, 16-fold and 3-fold velocities, the pickup will stop at point P upon advancing into the lead-out area during the search, whereupon "END" shown in Fig. 12 will be displayed, hence objection. Accordingly, the circuit 38 is adapted to detect the lead-out signal only during reproduction at the usual velocity, permitting the pickup to reach the designated address.

In the case where point T in Fig. 15 is not the designated address, and the designated address is not present on the reproduction side, the pickup advances into the lead-out area at the usual velocity as indicated in a broken line in Fig. 15. In this case, the display screen is made mute, and the lead-out signal is detected at point U, whereupon the pickup is retained in the same position, and the above-mentioned display given as already described.

The access operation involving varying reproduction velocities is executed not only for scanning across the program area and the lead-out area but also for scanning the program area. For example when the frame number "1000" is designated, the pickup is brought to frame "1300" at 300-fold velocity, then to frame "900" at 100-fold velocity, to frame "1050" at 16-fold velocity and to frame "995" at 3-fold velocity and finally reaches the designated frame "1000" at the usual velocity.

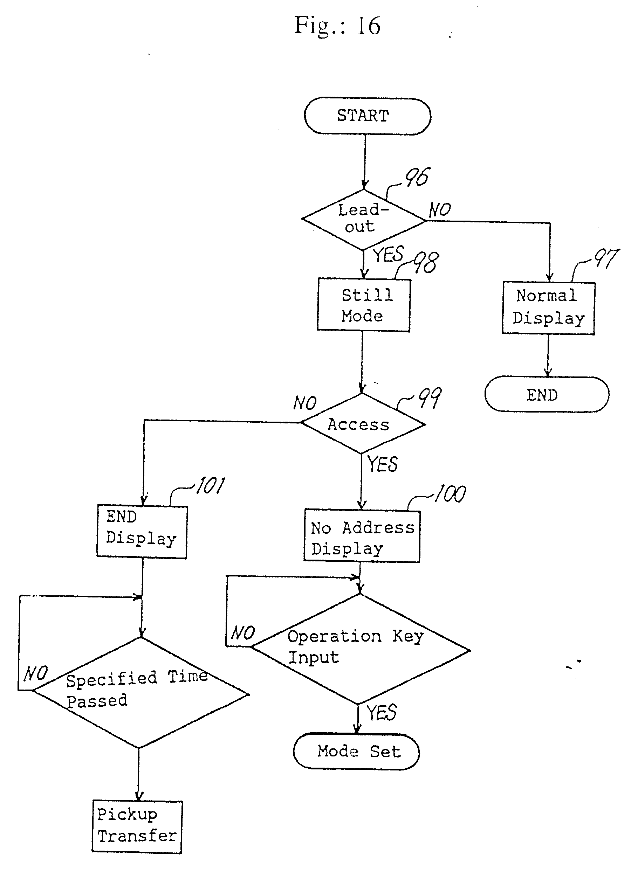

Fig. 16 shows the operation of the operation mode control circuit 95.

First, step 96 inquires whether the lead-out signal has been detected. If the answer is in the negative, a usual display as shown in Fig. 13 is given in step 97. When the answer is in the affirmative, the still picture reproduction mode is set in step 98. The following step 99 inquires whether a random access instruction is given. When the instruction is given, the display shows "NO ADDRESS" representation such as one shown in Fig. 14 (step 100). The system then waits for the input from an operation key specifying the next operation mode. In response to the key input given, the corresponding mode is set. On the other hand, if no random access instruction is delivered, "END" is displayed as shown in Fig. 12. A predetermined period of time thereafter, the pickup is shifted to the stand-by position.

If the address to be accessed is designated errorneously in the random access mode, the circuit of Fig. 10 functions to immediately display the absence of the address in error and is therefore of great use.

## Claims

1. An apparatus for reproducing signals from both sides of a disc (1) in succession having at least one pickup (2) movable radially of the disc (1) while the disc (1) is being rotated at a high speed, drive control means (3) for controlling the rotation of the disc (1) and the movement of the pickup (2), signal reproduction means (4) having connected thereto the output terminal of the pickup (2), random access means for shifting the pickup (2) to a desired address position, and lead-out detecting means (38) for reading out a lead-out signal from the signal recording face of the disc (1), **characterized** by means for decreasing the reproduction velocity by the pickup (2) gradually from the highest velocity to usual velocity in the random access mode in order to approach a designated address, whereby the lead-out detecting means (38) read out the lead-out signal only at the usual reproduction velocity as the regular lead-out signal, means for setting a still picture reproduction mode when the regular lead-out signal has been detected and display means for indicating that no designated address is found when the regular lead-out signal has been detected.

2. The apparatus as claimed in claim 1, **characterized** in that it further comprises address designating means (76) for designating the address where reproduction by the pickup (2) is to be started and side data, and access control means (82) for controlling the random access to both sides of the disc (1) based on the side data designated by the address designating means (76).

## Patentansprüche

1. Gerät zum Wiedergeben von Signalen von beiden Seiten einer Platte (1) in Folge mit zumindest einem Aufnehmer (2), der radial zur Platte (1) bewegbar ist, während die Platte (1) mit hoher Geschwindigkeit dreht, Antriebssteuermitteln (3) zum Steuern der Drehung der Platte (1) und der Bewegung des Aufnehmers (2), Signalwiedergabemitteln (4), die mit dem Ausgangsanschluß des Aufnehmers (2) verbunden sind, Freizugriffsmitteln zum Verschieben des Aufnehmers (2) in eine gewünschte Adreßposition und Auslauferfassungsmittel (38) zum Auslesen eines Auslaufsignals von einer Signalaufzeichnungsfläche der Platte (1), **gekennzeichnet** durch Mittel zum Vermindern der Wiedergabegeschwindigkeit durch den Aufnehmer (2) graduell von der höchsten Geschwindigkeit auf normale Geschwindigkeit in dem Freizugriffsmodus, um sich einer bezeichneten Adresse zu nähern, wobei Ausleseerfassungsmittel (38) das Auslaufsignal nur bei der normalen Wiedergabegeschwindigkeit als reguläres Auslaufsignal auslesen, Mittel zum Einstellen eines Standbild-Wiedergabemodus, wenn das reguläre Auslaufsignal erfaßt wird und Anzeigemittel zum Anzeigen, daß keine bezeichnete Adresse gefunden wurde, wenn das reguläre Auslaufsignal erfaßt wird.

2. Ein Gerät nach Anspruch 1, dadurch **gekennzeichnet**, daß es ferner Adreßbezeichnungsmittel (76) aufweist, zum Zuweisen der Adresse, wo die Wiedergabe durch den Aufnehmer (2) zu beginnen hat und Seitendaten, und Zugriffssteuermittel (82) zum Steuern des freien Zugriffs auf beide Seiten der Platte (1) basierend auf den Seitendaten, die durch die Adreßbezeichnungsmittel (76) bezeichnet sind.

## Revendications

1. Appareil pour reproduire des signaux successivement à partir des deux faces d'un disque (1), qui comporte au moins une tête de lecture (2) pouvant être déplacée radialement par rapport au disque (1) tandis que le disque (1) est entraîné en rotation à grande vitesse, un moyen (3) de commande de l'entraînement pour commander la rotation du disque (1) et le mouvement de la tête de lecture (2), un moyen (4) de reproduction du signal auquel est couplé la borne de sortie de la tête de lecture (2), un moyen d'accès aléatoire servant à déplacer la tête de lecture (2) vers une position d'adresse souhaitée et un moyen (38) de détection de la sortie pour lire un signal de sortie à partir de la face d'enregistrement de signal du disque (1),
caractérisé par un moyen pour diminuer la vitesse de reproduction de la tête de lecture (2) de façon progressive de la vitesse la plus élevée à une vitesse habituelle dans le mode d'accès aléatoire afin de s'approcher d'une adresse désignée, ce qui fait que le moyen (38) de détection de la sortie lit le signal de sortie uniquement à la vitesse habituelle de reproduction en tant que le signal de sortie régulier, un moyen pour établir un mode de reproduction d'image fixe quand le signal de sortie régulier a été détecté et un moyen d'affichage pour indiquer qu'aucune adresse désignée n'est trouvée quand le signal de sortie régulier a été détecté.

2. Appareil selon la revendication 1, caractérisé en ce qu'il comprend en outre un moyen (76) de désignation d'adresse pour désigner l'adresse où doit démarrer la reproduction par la tête de lecture (2), ainsi que des données annexes, et un moyen (82) de commande d'accès pour commander l'accès aléatoire aux deux faces du disque (1) en se basant sur les données annexes désignées par le moyen (76) de désignation d'adresse.
